# FASCICULE DE BREVET EUROPEEN

(11) **EP 0 437 392 B1**
(45) Date de publication et mention de la délivrance du brevet: **01.12.1993**
(21) Numéro de dépôt: 91400029.4
(22) Date de dépôt: 09.01.1991
(51) Int. Cl.: B67D 5/37, F16K 5/04

(54) **Lance de distribution d'hydrocarbure**
Kraftstoff-Spendepistole
Fuelling nozzle

(30) Priorité: 10.01.1990 FR 9000205
(43) Date de publication de la demande: 17.07.1991
(73) Titulaire: SCHLUMBERGER INDUSTRIES, F-92542 Montrouge Cédex (FR)
(72) Inventeur: Janssen, Sylvain, F-92200 Neuilly (FR); Delahaye, Frans, The Hague (NL); Fournier, Jacques, F-91120 Brétigny sur Orge (FR)
(74) Mandataire: Dronne, Guy

(56) Documents cités:
- FR-A- 731 145
- GB-A- 192 084
- US-A- 4 331 190
- US-A- 4 716 934

## Description

La présente invention a pour objet une lance de distribution d'hydrocarbure conçue pour équiper les distributeurs d'hydrocarbure dans les stations services.

Les lances de distribution d'hydrocarbure existantes comportent un certain nombre de systèmes de sécurité pour éviter de répandre de l'hydrocarbure sur le sol. On peut citer les mécanismes qui interrompent la distribution de l'hydrocarbure lorsque le réservoir du véhicule est plein et ceux qui empêchent la sortie d'hydrocarbure de la lance lorsque l'extrémité de celle-ci correspondant au tube d'écoulement est dirigée vers le haut.

Ces différents systèmes de sécurité permettent habituellement de découpler la gâchette d'actionnement du pistolet d'une vanne d'écoulement commandée normalement par cette gâchette. Ce découplage peut notamment être obtenu au moyen d'un canal de détection logé à l'intérieur du tube d'écoulement du pistolet et dont les extrémités débouchent respectivement à l'extrémité du tube d'écoulement et dans un tube venturi formé entre le clapet de la vanne et son siège. L'écoulement de l'hydrocarbure dans la vanne crée une dépression dans le tube venturi, qui produit un vide à l'intérieur du canal dès que l'autre extrémité de ce dernier est obturée, c'est à dire lorsque le réservoir du véhicule est plein, le niveau de l'hydrocarbure dans le réservoir du véhicule atteignant le tube d'écoulement et obturant donc le canal de détection. Sous l'effet du vide ainsi créé, une membrane sensible à la pression régnant dans le canal se déplace et commande l'interruption de la liaison mécanique entre la gâchette et le clapet du robinet. Tout actionnement de la gâchette est alors sans effet sur le robinet, de sorte que l'écoulement de l'hydrocarbure est interrompu.

Généralement, ce système de sécurité est complété par un deuxième clapet placé dans le canal et fonctionnant par gravité. Lorsque le pistolet de distribution d'hydrocarbure est orienté vers le haut, ce clapet obture automatiquement le canal par gravité. Cette obturation entraîne le découplage de la gâchette et du clapet du robinet, de la même manière que précédemment.

Dans la pratique, il s'avère cependant que ces systèmes de sécurité sont parfois insuffisants pour éviter un écoulement accidentel des hydrocarbures en dehors du réservoir du véhicule. En particulier, il est toujours possible, en actionnant la gâchette, d'obtenir l'écoulement de l'hydrocarbure lorsque le pistolet est orienté vers le bas tout en n'étant pas engagé dans la tubulure d'entrée du réservoir du véhicule. Dans ce cas, la fraction d'hydrocarbure qui se répand sur le sol de la station service cause des nuisances et peut entraîner des accidents.

Le document US-A-4 331 190 décrit une lance de distribution d'hydrocarbures munie d'un dispositif qui commande l'arrêt de la pompe lorsque la lance est raccrochée. Un tel système ne résout pas le problème posé.

Un objet de la présente invention est de compléter ces systèmes de sécurité en fournissant une lance de distribution d'hydrocarbure conçue de telle sorte qu'il n'est pas possible de commander la distribution d'hydrocarbure tant que le tube d'écoulement de la lance n'est pas introduit dans la tubulure d'entrée du réservoir du véhicule, c'est-à-dire au cours du trajet effectué par la lance entre le distributeur d'hydrocarbure et la tubulure d'entrée du réservoir.

Pour atteindre ce but, selon l'invention, la lance de distribution d'hydrocarbure raccordée à un tuyau flexible et comportant un tube d'écoulement qui est introduit dans la tubulure d'entrée d'un réservoir d'hydrocarbure pour remplir ledit réservoir, comprenant:
- une première partie formant une poignée solidaire dudit tuyau flexible;
- une deuxième partie comprenant ledit tube d'écoulement ; et
- un conduit d'écoulement traversant chacune desdites parties, se caractérise en ce que ladite deuxième partie est montée pivotante autour d'un axe perpendiculaire audit tube d'écoulement par rapport à ladite première partie, et en ce qu'elle comprend en outre:
- une vanne disposée dans ledit conduit d'écoulement et dont l'état est commandé par le mouvement relatif desdites parties de la lance ; et
- des moyens de rappel pour maintenir lesdites deux parties de la lance dans une position de repos dans laquelle ladite vanne est fermée, l'ouverture de ladite vanne étant obtenue en agissant sur ladite première partie formant poignée pour provoquer un déplacement relatif desdites deux parties de la lance.

Un autre avantage de l'invention est de fournir une lance de distribution d'hydrocarbure dépourvue de gâchette. Dans les lances antérieures, l'usager peut commander par inadvertance la délivrance d'hydrocarbure, en exerçant avec une de ses mains un effort sur la gâchette.

Dans la présente invention, l'usager peut aussi commander indûment la fourniture d'hydrocarbure pendant le trajet effectué par la lance entre le distributeur d'hydrocarbure et le réservoir, mais pour cela l'usager doit utiliser ses deux mains, une tenant la première partie de la lance, l'autre la deuxième partie et il doit exercer un effort sur chacune de ces deux parties de la lance provoquant un mouvement relatif entre ces deux parties. Cette possibilité d'erreur de commande est fort peu probable, sauf intention délivrée de la part de l'usager.

D'autres caractéristiques et avantages de l'invention apparaîtront plus clairement à la lecture de la description qui suit de plusieurs modes de réalisation de l'invention donnés à titre d'exemples non limitatifs . La description se réfère au dessin annexé sur lequel :
La figure 1 est une vue de côté d'une lance selon l'invention en position de repos ;
La figure 2 est une vue de côté d'une lance selon l'invention en cours de délivrance d'hydrocarbure ;
La figure 3 est une vue de côté en coupe longitudinale, d'un premier mode de réalisation de moyens d'articulation de la figure 1 ;
La figure 4 est une vue en coupe verticale selon IV-IV de la figure 3.
La figure 5 est une vue de côté en coupe longitudinale du premier mode de réalisation de moyens d'articulation en fonctionnement ;
La figure 6 est une vue de côté en coupe longitudinale d'un deuxième mode de réalisation de moyens d'articulation de la figure 1.
La figure 7 est une vue de côté en coupe longitudinale du deuxième mode de réalisation de moyens d'articulation en fonctionnement.
La figure 8 est une vue en coupe verticale selon VIII-VIII de la figure 6.

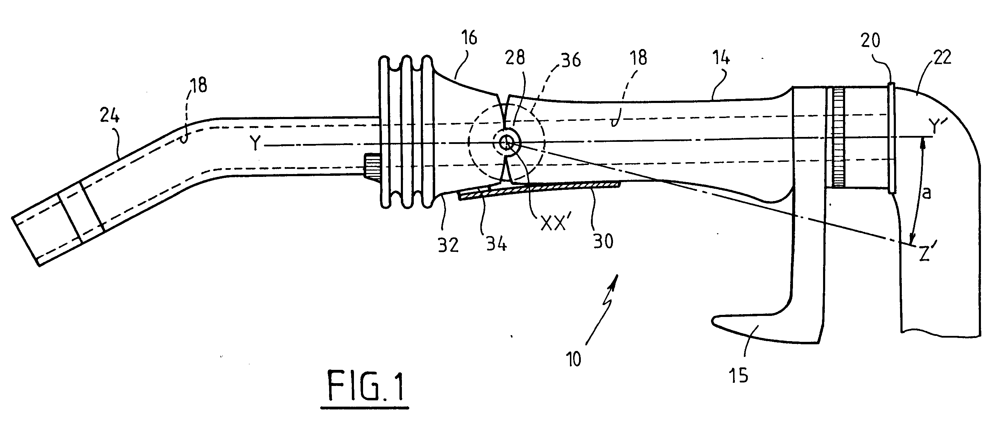

En se référant tout d'abord à la figure 1, la lance 10 selon l'invention comprend une première partie 14 formant une poignée 15 et une deuxième partie 16 traversée par un conduit d'écoulement 18. L'extrémité du conduit d'écoulement 18 située dans la première partie 14 de la lance 10 est prévue pour être fixée au moyen d'un raccord 20 sur un tuyau flexible 22 dont l'extrémité opposée est reliée au distributeur d'hydrocarbure d'une station service. La deuxième partie 16 comprend un tube d'écoulement 24 par lequel débouche le conduit d'écoulement 18, côté deuxième partie, ce tube d'écoulement 24 étant prévu pour être introduit dans une tubulure d'entrée 26 d'un réservoir de véhicule.

La première partie 14 formant poignée et la deuxième partie 16 de la lance 10 sont articulées entre elles à l'aide de moyens de commande 28 d'axe XX'.

Les deux parties 14 et 16 de la lance 10 peuvent pivoter l'une par rapport à l'autre autour de l'axe XX' des moyens de commande 28 d'un angle maximum a.

La lance 10 selon l'invention comprend une vanne 36 qui a pour rôle de réguler la distribution d'hydrocarbure. Plusieurs modes de réalisation de la vanne 36 seront décrits ultérieurement. La vanne 36, dans un mode de réalisation, est disposée à l'emplacement de l'articulation entre la première partie 14 formant poignée et la deuxième partie 16, mais on peut tout aussi bien envisager un vanne située en dehors de cette articulation.

Dans le mode de réalisation illustré par la figure 1, la lance 10 se trouve en position de repos, c'est à dire l'état dans lequel se trouve la lance au moment où elle se trouve encore accrochée au distributeur d'hydrocarbure (non représenté) ou pendant le trajet entre le distributeur d'hydrocarbure et le réservoir 12 d'un véhicule. Dans cette position de repos, il est impossible de commander la délivrance d'hydrocarbure. Comme illustré par la figure 1, cette position de repos correspond à un alignement des parties 14 et 16 de la lance 10 suivant l'axe YY' qui passe par l'axe du cylindre formé par le conduit d'écoulement 18, on peut aussi envisager une position de repos dans lequelle la partie 14 formant poignée et la deuxième partie 16 de la lance 10 présentent entre elles un angle inférieur à a.

Un moyen de rappel, par exemple un ressort de rappel 30 maintient en position de repos illustrée par la figure 1 les parties 14 et 16 de la lance 10 qui restent alignées suivant l'axe YY'. Ce ressort de rappel 30 fixé sur la paroi extérieure 32 de la partie 16 de la lance 10 par des moyens de fixation 34, tels que moyens de collage ou tout autre moyen, est à cheval sur les parties 14 et 16 de la lance 10.

Cette vanne 36 est fermée lorsque les parties 14 et 16 de la lance 10 sont alignées suivant l'axe YY′ c'est-à-dire lorsque la lance 10 est en position de repos. La vanne 36 étant fermée, cela implique que l'hydrocarbure se trouvant dans le conduit d'écoulement 18 côté partie 14 de la lance 10 est bloqué et ne peut pas se répandre dans le conduit d'écoulement 18 côté partie 16 de la lance 10 et s'évacuer à l'extrémité du tube d'écoulement 24. Il est donc impossible de faire couler de l'hydrocarbure par le tube d'écoulement 24 tant que les parties 14 et 16 de la lance 10 restent en position de repos c'est à dire alignées dans le mode de réalisation décrit, sous l'effet du ressort de rappel 30.

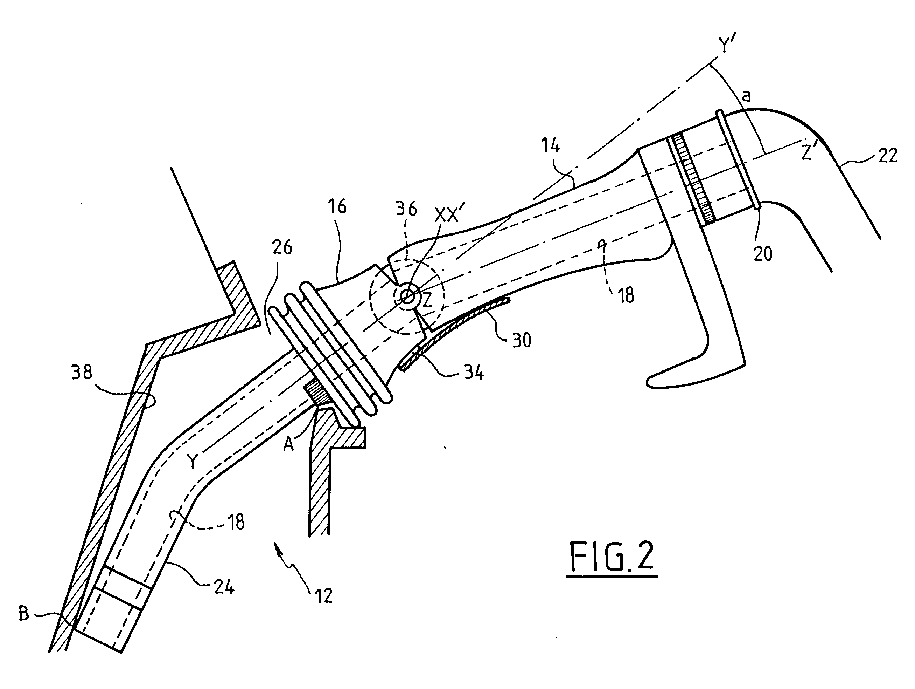

La figure 2 illustre une lance 10 selon l'invention, introduite dans la tubulure d'entrée 26 d'un réservoir 12 de véhicule en cours de distribution d'hydrocarbure. L'usager qui veut se procurer de l'hydrocarbure pour remplir le réservoir de son véhicule, décroche d'un distributeur d'hydrocarbure une lance 10 selon l'invention par la partie 14 formant poignée solidaire du tuyau flexible 22. La lance 10 à ce moment là est toujours reliée au distributeur d'hydrocarbure par l'intermédiaire d'un tuyau flexible 22 par lequel va être distribué l'hydrocarbure. Tant que le tube d'écoulement 24 n'est pas introduit dans le réservoir 12, la lance 10 est en position de repos sous l'action du ressort de rappel 30. c'est-à-dire que les parties 14 et 16 restent alignées dans le mode de réalisation décrit. De ce fait le robinet 36 reste fermé, ne permettant pas la distribution d'hydrocarbure. Lorsque la lance 10 est introduite dans le réservoir 12 d'un véhicule par sa tubulure d'entrée 26, le tube d'écoulement 24 de la partie 16 de la lance 10 est en contact aux points A et B avec la paroi intérieure 38 du réservoir 12. La partie 16 de la lance 10 étant ainsi bloquée aux points A et B du réservoir 12, l'usager tenant la lance 10 par la partie 14 peut provoquer le pivotement d'un angle a maximum autour de l'axe XX' de la partie 14 de la lance 10 en exerçant une force vers le bas sur la partie 14 à l'encontre du ressort de rappel 30. L'angle a est l'angle qui apparaît entre l'axe YY' au moment où la lance est en position de repos, les parties 14 et 16 étant alignées, et l'axe ZZ' qui passe par l'axe du cylindre formé par le conduit d'écoulement 18 côté partie 14 de la lance 10 au moment où l'usager exerce une force vers le bas sur la partie 14.

La lance 10 dans la position où un angle a existe entre les axes YY' et ZZ', présente une vanne 36 qui est alors ouverte permettant à l'hydrocarbure de s'écouler dans le réservoir 12 via le tube d'écoulement 24 traversé par le conduit d'écoulement 18. Dès que l'usager interrompt la force qu'il exerce sur la partie 14 de la lance 10 en relâchant ladite partie 14 par exemple, la partie 14 effectue un mouvement vers le haut sous l'action du ressort de rappel 30 de sorte qu'elle se trouve de nouveau alignée avec la partie 16 selon l'axe YY'. La lance 10 de nouveau en position de repos, présente une vanne qui est fermée provoquant l'arrêt de l'écoulement de l'hydrocarbure dans le réservoir 12.

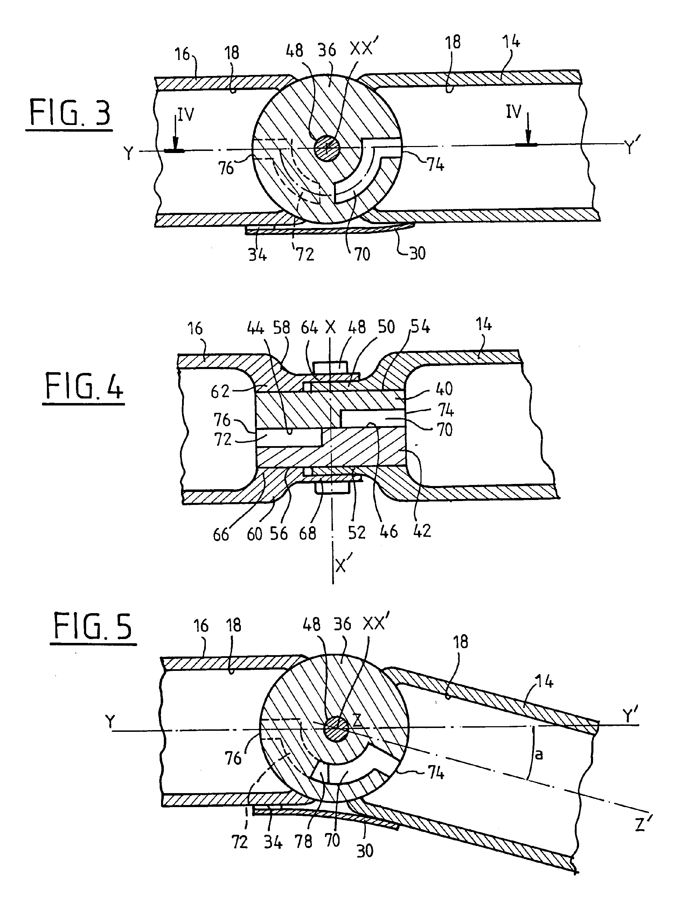

Les figures 3, 4 et 5 illustrent un premier mode de réalisation de la vanne 36. La vanne 36 selon le premier mode de réalisation est constituée par deux pastilles cylindriques 40 et 42 en céramique, par exemple, d'axe XX'. Les faces planes intérieures 44 et 46, perpendiculaires à l'axe XX', respectivement des pastilles 40 et 42 sont plaquées l'une contre l'autre de façon étanche par un système de serrage 48 qui définit également l'axe de rotation XX'.

La partie 14 de la lance 10 comprend deux extrémités 50 et 52 situées de part et d'autre des deux pastilles 40 et 42 plaquées l'une contre l'autre. Ces deux extrémités 50 et 52 sont intégrées au système de serrage 48 et peuvent pivoter par rapport à la partie 16 de la lance 10 autour de l'axe de rotation XX'. L'extrémité 50 de la partie 14 est solidaire de la pastille 40 sur sa face plane extérieure 54 par des moyens de fixation tels que moyens de collage.... L'extrémité 52 est en contact avec la face plane extérieure 56 de la pastille 42, mais glisse sur ladite face 56 lorsque la partie 14 pivote par rapport à la partie 16 autour de l'axe XX'.

La partie 16 de la lance 10 comprend deux extrémités 58 et 60 situées de part et d'autre des deux pastilles 40 et 42 plaquées l'une contre l'autre, l'extrémité 58 comprenant deux portions 62 et 64, et l'extrémité 60 comprenant aussi deux autres portions 66 et 68. Les deux extrémités 58 et 60 sont intégrées au système de serrage 48 par l'intermédiaire de la portion 64 de l'extrémité 58 et de la portion 68 de l'extrémité 60, et peuvent pivoter par rapport à la partie 14 de la lance 10 autour de l'axe de rotation XX'. La portion 64 de l'extrémité 58 est en contact avec l'extrémité 50 de la partie 14 dans la direction X et la portion 62 est en contact avec la face plane extérieure 54 de la pastille 40 de telle sorte que la portion 64 glisse sur l'extrémité 50 et la portion 62 glisse sur ladite face 54 lorsque la partie 14 pivote par rapport à la partie 16 autour de l'axe XX'. La portion 68 de l'extrémité 60 est en contact avec l'extrémité 52 de la partie 14 dans la direction X' et glisse sur ladite extrémité 52 lorsque la partie 14 pivote par rapport à la partie 16 autour de l'axe XX'. La portion 66 est solidaire de la pastille 42 sur sa face plane extérieure 56 par des moyens de fixation tels que des moyens de collage.

Dans la face intérieure 44 de la pastille 40 et dans la face intérieure 46 de la pastille 42 sont creusés des canaux borgnes respectivement 70 et 72. L'extrémité ouverte 74 du canal 70 débouche dans le conduit d'écoulement 18 côté partie 14 de la lance 10, alors que l'extrémité ouverte 76 du canal 72 débouche dans le conduit d'écoulement 18 côté partie 16 de la lance 10. Les canaux borgnes 70 et 72 sont portées sur un arc de cercle d'axe de rotation XX'.

Dans la position de repos illustrée par les figures 3 et 4, la première partie 14 et la deuxième partie 16 de la lance 10 sont alignées suivant l'axe YY'. De ce fait les canaux 70 et 72 ne se superposent pas. L'hydrocarbure contenu dans le conduit d'écoulement 18 côté partie 14 ne peut pas s'écouler dans le conduit d'écoulement 18 côté partie 16 car il n'y a pas communication entre les canaux 70 et 72. La vanne 36 est donc fermée.

Au contraire lorsque les parties 14 et 16 de la lance 10 font entre elles l'angle a c'est-à-dire l'angle existant entre les axes YY' et ZZ' comme illustré par la figure 5, il y a superposition partielle des canaux 70 et 72 dans l'intervalle 78. Ce pivotement de la partie 14 par rapport à la partie 16 autour de l'axe XX' est obtenu par la force vers le bas exercée par l'usager sur la partie 14 lorsque le tube d'écoulement 24 est introduit dans le réservoir 12. A ce moment là, la vanne 36 étant ouverte, l'hydrocarbure peut s'écouler de la partie 14 vers la partie 16 de la lance 10 par l'intermédiaire de l'intervalle 78 où des canaux 70 et 72 se superposent créant ainsi une communication. Dès que l'usager interrompt la force qu'il exerce sur la partie 14, la lance 10 retrouve sa position de repos sous l'action du ressort de rappel 30. Il n'y a plus superposition partielle des canaux 70 et 72, la vanne 36 est donc de nouveau fermée.

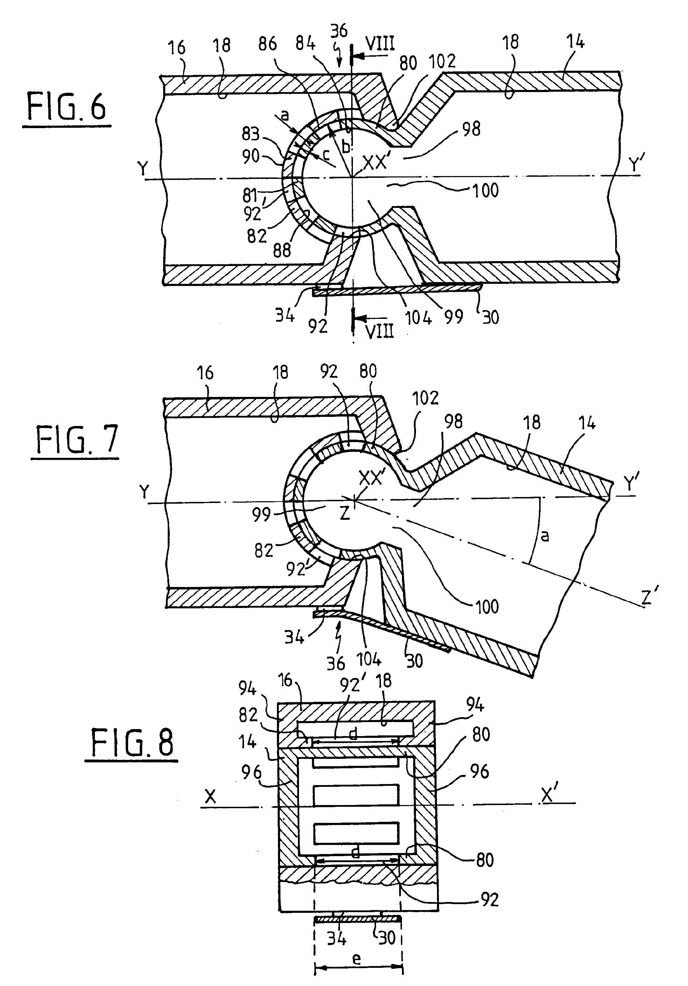

Les figures 6, 7 et 8 illustrent un deuxième mode de réalisation de la vanne 36. La vanne 36 selon le deuxième mode de réalisation résulte de la configuration particulière de la première partie 14 et de la deuxième partie 16 de la lance 10 autour de l'axe XX' de rotation ou de pivotement de l'une partie par rapport à l'autre.

La vanne 36 selon le deuxième mode de réalisation est constituée par deux cylindres non fermés circulairement 80 et 82, droits creux et concentriques d'axe XX' comprenant respectivement des faces internes 84 et 88, et des faces externes 86 et 90.

Le cylindre 80 comprend une fente 98 dans la direction XX' permettant l'accès entre le conduit d'écoulement 18 côté première partie 14 formant poignée et l'intérieur 99 du cylindre 80.

Le cylindre 80 de rayon b possède de plus une paroi cylindrique 81 d'épaisseur c, et est solidaire de la partie 14 de la lance 10. La face interne 84 du cylindre 80 est en regard de l'extrémité du conduit d'écoulement 18 située dans la première partie 14 de la lance 10. Sa face externe 86 est en contact avec la face interne 88 du cylindre 82.

Le cylindre 82 comprend une fente 100 dans la direction XX' permettant l'engagement du cylindre intérieur 80 dans le cylindre 80, située entre les lèvres 102 et 104 du cylindre extérieur 82.

Le cylindre 82 de diamètre a + b possède de plus une paroi cylindrique 83 d'épaisseur a, et est solidaire de la partie 16 de la lance 10. Sa face interne 88 est en contact avec la face externe 86 du cylindre 80. La face interne 88 du demi-cylindre 82 et la face externe 86 du cylindre 80 peuvent glisser l'une sur l'autre autour de l'axe XX' comme cela sera expliqué plus loin dans la description. La face externe 90 du cylindre 82 est en regard du conduit d'écoulement 18 située dans la deuxième partie 16 de la lance 10.

Ce cylindre extérieur 82 est porté sur un arc de cercle supérieur à 180° empêchant la séparation des cylindres 80 et 82 dans la direction YY'.

Les parois cylindriques 81 et 83 respectivement des cylindres 80 et 82 présentent des ouvertures 92 et 92' de longueur d s'étendant selon la direction XX' espacées l'une de l'autre d'un arc de cercle de même longueur.

Les cylindres 80 et 82 présentent une longueur e selon la direction XX'.

L'ensemble du système formant la vanne 36 est étanche ne permettant pas à l'hydrocarbure de s'échapper à l'extérieur, du fait de la présence de parois latérales 94, perpendiculaires à l'axe XX' et solidaires de la partie 16 de la lance, encadrant le demi-cylindre 82, et de parois latérales 96, perpendiculaires à l'axe XX' et solidaires de la partie 14 de la lance 10, encadrant cylindre 80.

Dans la position de repos illustrée par les figures 6 et 8, la première partie 14 et la deuxième partie 16 de la lance 10 sont alignées suivant l'axe YY'. Dans cette position, les ouvertures 92 situées dans le cylindre 80 et les ouvertures 92' situées dans le cylindre 82 sont décalées de telle façon qu'elles ne se superposent pas. La face interne 88 du cylindre 82 se trouve en regard de chaque ouverture 92 du cylindre 80. L'hydrocarbure circulant dans le conduit d'écoulement 18 côté partie 14 ne peut pas s'écouler dans le conduit d'écoulement 18 situé dans la partie 16 car la face interne 88 du cylindre 82 vient obstruer chaque ouverture 92 du cylindre 80 empêchant ainsi toute communication. Le robinet 36 est donc fermé.

En revanche lorsque les parties 14 et 16 de la lance 10 font entre elles l'angle a, c'est-à-dire l'angle existant entre les axes YY' et ZZ' comme illustré par la figure 7, les ouvertures 92 du cylindre 80 se trouvent en regard des ouvertures 92' du cylindre 82. Cette superposition des ouvertures 92 et 92' est obtenue par le glissement de la face externe 86 du cylindre 80 sur la face interne 88 du demi-cylindre 82. Ce glissement par contact est provoqué par le pivotement de la partie 14 par rapport à la partie 16 autour de l'axe XX' et permet de résoudre les problèmes d'étanchéité. Ce pivotement est obtenu par la force vers le bas exercée par l'usager sur la partie 14 lorsque le tube d'écoulement 24 est introduit dans le réservoir 12. A ce moment là la vanne 36 étant ouverte, l'hydrocarbure peut s'écouler de la partie 14 vers la partie 16 de la lance 10 car les ouvertures 92 du cylindre 80 sont en regard des ouvertures 92' du cylindre 82. L'avantage de ce deuxième mode de réalisation de la vanne par rapport au premier mode est que l'on obtient une section de passage plus importante par l'intermédiaire des ouvertures 92 et 92' permettant un débit d'hydrocarbure plus important. Dès que l'usager interrompt la force qu'il exerce sur la partie 14, la lance 10 retrouve sa position de repos sous l'action du ressort de rappel 30. Il n'y a plus superposition des ouvertures 92 et 92' des demi-cylindres 80 et 82, la vanne 36 est donc de nouveau fermée.

## Revendications

1. Lance de distribution d'hydrocarbure (10) raccordée à un tuyau flexible (22) et comportant un tube d'écoulement (24) qui est introduit dans la tubulure d'entrée (26) d'un réservoir (12) d'hydrocarbure pour remplir ledit réservoir, comprenant :
- une première partie (14) formant une poignée (15) solidaire dudit tuyau flexible (22) ;
- une deuxième partie (16) comprenant ledit tube d'écoulement (24) ; et
- un conduit d'écoulement (18) traversant chacune desdites parties,
caractérisée en ce que ladite deuxième partie (16) est montée pivotante autour d'un axe (XX') perpendiculaire audit tube d'écoulement par rapport à ladite première partie, et en ce qu'elle comprend en outre :
- une vanne (36) disposée dans ledit conduit d'écoulement (18) et dont l'état est commandé par le mouvement relatif desdites parties de la lance ; et
- des moyens de rappel (30, 34) pour maintenir lesdites deux parties de la lance dans une position de repos dans laquelle ladite vanne est fermée, l'ouverture de ladite vanne étant obtenue en agissant sur ladite première partie formant poignée pour provoquer un déplacement relatif desdites deux parties de la lance.

2. Lance de distribution d'hydrocarbure selon la revendication 1, caractérisée en ce que ladite vanne est formée par deux pièces (40, 42) présentant chacune une face de contact (44, 46) perpendiculaire audit axe XX', lesdites pièces étant plaquées l'une contre l'autre pour réaliser une étanchéité entre elles, chaque pièce étant solidaire d'une des parties de ladite lance, chaque face de contact comportant un canal (70, 72) dont une première extrémité débouche dans le conduit d'écoulement (18) de la partie de la lance dont elle est solidaire, l'autre extrémité du canal étant borgne, lesdits canaux étant disposés de telle manière que, lorsque les deux parties (14, 16) de la lance sont en position de repos, il n'y a aucune superposition des deux canaux et, lorsque les deux parties de la lance sont écartées de leur position de repos par rotation, lesdits canaux se superposent progressivement par quoi l'hydrocarbure peut s'écouler du conduit d'écoulement de la première partie de la lance vers le conduit d'écoulement de la deuxième partie de la lance.

3. Lance de distribution d'hydrocarbure selon la revendication 1, caractérisée en ce que ladite vanne (36) est formée par deux pièces (80, 82), chacune desdites pièces étant solidaire d'une des parties de la lance (14, 16), chaque pièce présentant une face de contact (86, 88) ayant la forme d'une portion de surface cylindrique, les deux surfaces cylindriques ayant le même axe XX', lesdites faces de contact étant plaquées l'une contre l'autre pour réaliser une étanchéité entre elles, chaque pièce comportant des ouvertures (92, 92') dont une première extrémité débouche dans ladite face de contact et dont l'autre extrémité communique avec le conduit d'écoulement de la partie de la lance dont ladite pièce est solidaire, les premières extrémités des ouvertures étant respectivement disposées dans lesdites faces de contact de telle manière qu'il n'y ait aucune superposition entre elles lorsque les deux parties de la lance sont dans la position de repos et que lesdites premières extrémités des deux groupes d'ouvertures se superposent progressivement lorsque les parties de la lance sont écartées de leur position de repos, par quoi l'hydrocarbure peut s'écouler du conduit d'écoulement (18) de la première partie (14) de la lance vers le conduit d'écoulement (18) de ladite deuxième partie (16) de la lance.

4. Lance de distribution d'hydrocarbure selon l'une quelconque des revendications 1 à 3, caractérisée en ce que, dans leur position de repos, lesdites première (14) et deuxième (16) parties de la lance sont sensiblement alignées.

## Patentansprüche

1. Spendepistole für Kohlenwasserstoff (10), die mit einem biegsamen Schlauch (22) verbunden ist, und ein Ausflußrohr (24) aufweist, das in den Eingangsrohrstutzen (26) eines Kohlenwasserstofftanks (12) eingeführt ist, um den Tank zu füllen mit:
- einem ersten Bereich (14), der einen Griff (15) bildet, der mit dem biegsamen Schlauch (22) verbunden ist;
- einem zweiten Bereich (16), der das Ausflußrohr (24) aufweist, und
- eine Ausflußleitung (18), die einen jeden der Bereiche durchquert, dadurch gekennzeichnet, daß der zweite Bereich (16) schwenkbeweglich um eine Achse (XX') senkrecht zum Ausflußrohr bezüglich des ersten Bereichs angebracht ist, und daß sie weiterhin aufweist:
- ein Ventil (36), das in der Ausflußleitung (18) angeordnet ist, und dessen Stellung bzw. Zustand durch die relative Bewegung der Bereiche der Spendepistole gesteuert wird; und
- Rückholeinrichtungen (30,34), um die genannten beiden Bereiche der Spendepistole in einer Ruhestellung zu halten, in der das Ventil geschlossen ist, wobei die Öffnung des Ventils durch Einwirken auf den ersten Bereich erhalten wird, der einen Handgriff bildet, um eine relative Bewegung der beiden Bereiche der Spendepistole hervorzurufen.

2. Spendepistole für Kohlenwasserstoff nach Anspruch 1, dadurch gekennzeichnet, daß das Ventil durch zwei Teile (40,42) gebildet ist, die jeweils eine Kontaktfläche (44,46) aufweisen, die senkrecht zur Achse XX' verläuft, wobei die Teile aneinandergebracht sind, um eine Dichtheit zwischen ihnen zu erzeugen, wobei jedes Teil mit einem der Bereiche der Spendepistole verbunden ist, wobei jede Kontaktseite einen Kanal (70,72) aufweist, von dem ein erstes Ende in der Ausflußleitung (18) des Bereichs der Spendepistole mündet, mit dem er verbunden ist, und das andere Ende des Kanals blind ist, wobei die Kanäle derart angeordnet sind, daß, wenn die beiden Bereiche (14,16) der Spendepistole in Ruhestellung sind, keinerlei Übereinanderstellung der beiden Kanäle vorliegt, und, wenn die beiden Bereiche der Spendepistole beabstandet sind von ihrer Ruhestellung durch Drehung, die Kanäle allmählich sich übereinander anordnen, wodurch der Kohlenwasserstoff von der Ausflußleitung des ersten Bereichs der Spendepistole zu der Ausflußleitung des zweiten Bereichs der Spendepistole fließen kann.

3. Spendepistole für Kohlenwasserstoff nach Anspruch 1, dadurch gekennzeichnet, daß das Ventil (36) durch zwei Teile (80,82) gebildet wird, wobei ein jedes dieser beiden Teile mit einem Bereich der Spendepistole (14,16) verbunden ist, wobei jedes Teil eine Kontaktfläche (86,88) aufweist, die die Form eines Bereichs von zylindrischer Oberfläche aufweist, wobei die beiden zylindrischen Oberflächen dieselbe Achse XX' haben, wobei die Kontaktseiten aneinander angelegt sind, um eine Dichtheit zwischen ihnen zu erzeugen, wobei jedes Teil Öffnungen (92,92') aufweist, von denen ein erstes Ende in der Kontaktseite mündet, und von dem das andere Ende mit der Ausflußleitung des Bereiches der Spendepistole in Verbindung steht, von dem das Teil in Verbindung steht, wobei die ersten Enden der Öffnungen entsprechend in den Kontaktseiten derart angeordnet sind, daß sich keinerlei Übereinanderstellung zwischen ihnen ergibt, wenn die beiden Bereiche der Spendepistole sich in der Ruhestellung befinden, und die ersten Ende der beiden Gruppen von Öffnungen allmählich sich übereinander schieben, wenn die Bereiche der Spendepistole von ihrer Ruhestellung beabstandet sind, wodurch der Kohlenwasserstoff sich von der Ausflußleitung (18) des ersten Bereichs (14) der Spendepistole zu der Ausflußleitung (18) des zweiten Bereichs (16) der Spendepistole ergießen kann.

4. Spendepistole für Kohlenwasserstoff nach einem der Ansprüche 1 bis 3, dadurch gekennzeichnet, daß in ihrer Ruhestellung, der erste (14) und zweite (16) Bereich der Spendepistole im wesentlichen ausgerichtet sind.

## Claims

1. Fuel-dispensing nozzle (10) connected to a hose (22) and including a spout (24) which is inserted in the filling tube (26) of a fuel tank (12) so as to fill said tank, comprising:
- a first portion (14) forming a handle (15) and fixed to said hose (22);
- a second portion (16) comprising said spout (24); and
- a flow duct (18) passing through each of said portions,
characterized in that said second portion (16) is mounted so as to pivot about an axis (XX') which is perpendicular to said spout relative to said first portion, and in that it further comprises:
- a valve (36) disposed in said flow duct (18) with the opening of the valve being controlled by moving said nozzle portions relative to each other; and
- return means (30, 34) for maintaining said two nozzle portions in a rest position in which said valve is closed, the opening of said valve being obtained by acting on said first portion forming a handle so as to cause said two nozzle portions to move relative to each other.

2. Fuel-dispensing nozzle according to claim 1, characterized in that said valve is constituted by two pieces (40, 42), each having a contact face (44, 46) perpendicular to said axis XX', said pieces being pressed against each other to provide sealing therebetween, each of said pieces being fixed to one of the portions of said nozzle, each contact face including a channel (70, 72) having a first end opening out into the flow duct (18) of the nozzle portion to which it is fixed while the other end of the channel is blind, said channels being disposed in such a manner that when the two nozzle portions (14, 16) are in the rest position the two channels do not overlap, and when the two nozzle portions are moved away from their rest position by being rotated, said channels overlap progressively thereby enabling fuel to flow from the flow duct of the first nozzle portion to the flow duct of said second nozzle portion.

3. Fuel-dispensing nozzle according to claim 1, characterized in that said valve (36) is constituted by two pieces (80, 82), each of said pieces being fixed to one of the nozzle portions (14, 16), each piece having a contact face (86, 88) in the form of a cylindrical surface, the two cylindrical surfaces having the same axis XX', said contact faces being pressed against each other to provide sealing therebetween, each piece including openings (92, 92') having a first end opening out into said contact face while the other end communicates with the flow duct of the nozzle portion to which said piece is fixed, the first ends of the openings being disposed in respective ones of said contact faces in such a manner that they do not overlap one another when the two nozzle portions are in the rest position and that said first ends of the two groups of openings overlap progressively as the nozzle portions are moved away from their rest position, thereby enabling fuel to flow from the flow duct (18) of the first nozzle portion (14) to the flow duct (18) of said second nozzle portion (16).

4. Fuel-dispensing nozzle according to any one of claims 1 to 3, characterized in that said first (14) and second (16) portions are substantially in alignment when in their rest position.
